# FASCICULE DE BREVET EUROPEEN

(11) **EP 0 367 100 B1**
(45) Date de publication et mention de la délivrance du brevet: **29.12.1993**
(21) Numéro de dépôt: 89119874.9
(22) Date de dépôt: 26.10.1989
(51) Int. Cl.: F16K 27/07, B60P 3/24, F16K 11/22

(54) **Vanne à commande pneumatique**
Ventil mit pneumatischer Betätigung
Pneumatically actuated valve

(30) Priorité: 04.11.1988 FR 8814448
(43) Date de publication de la demande: 09.05.1990
(73) Titulaire: Société Anonyme dite: MOUVEX, F-75012 Paris (FR)
(72) Inventeur: Sergent, André, F-94130 Nogent-sur-Marne (FR)
(74) Mandataire: Simonnot, Bernard

(56) Documents cités:
- FR-A- 2 145 858
- US-A- 2 557 177
- US-A- 2 792 014
- US-A- 3 134 395
- US-A- 3 360 000

## Description

La présente invention concerne une vanne à commande pneumatique modulaire, applicable notamment à l'équipement de citernes à compartiments montées sur véhicule.

On sait en particulier que la plupart des camions-citernes comportent plusieurs compartiments et que ceux-ci peuvent être déchargés, soit un par un, soit plusieurs simultanément, par l'intermédiaire de compteurs ou d'un compartiment dit "mesure", ce dernier compartiment contenant une quantité de liquide bien déterminée agréée par le Service des Instruments de Mesure.

Dans le cas très fréquent des camions-citernes à multicompartiments, il peut être très utile, afin de diminuer les manipulations et d'accroître ainsi les vitesses de livraison, de relier plusieurs compartiments par un collecteur. La présence d'un tel collecteur entraîne cependant des difficultés d'exploitation si l'on veut conserver la souplesse d'utilisation des compartiments pour y placer des produits de nature différente :
- difficulté quant à l'utilisation des compartiments-mesures, car un collecteur fixe en interdit l'utilisation en tant que tels ;
- pollution par le mélange de produits qui peut se former dans le collecteur.

Bien entendu, les observations ci-dessus concernant le cas du déchargement s'appliquent de façon identique dans le cas du chargement par le bas des compartiments, ou chargement "en source".

On connaît de par le brevet français FR-A-2 145 858 un collecteur pour distribution ou reprise de fluides sous pression, applicable en particulier à l'air comprimé et composé d'un ensemble démontable de corps parallélépipédiques alignés par des faces latérales. Chaque élément constitue une vanne individuelle comportant des conduits et des clapets destinés à établir et couper les communications entre ceux-ci, l'un des conduits étant droit et traversant le corps de part en part entre deux faces opposées. Malgré la compacité et la souplesse de fonctionnement d'un tel collecteur, celui-ci ne constitue cependant qu'un assemblage de vannes, unitaires à une voie et à commande manuelle qui, par exemple, ne pourrait s'appliquer directement aux conditions d'exploitation rappelées plus haut.

La présente invention vise donc à remédier aux inconvénients ci-dessus en fournissant une vanne modulaire à commande pneumatique, permettant notamment de former collecteur entre n'importe quels compartiments, d'où très grande souplesse d'utilisation tout en éliminant les problèmes de pollution, et permettant également d'utiliser dans tous les cas un compartiment en compartiment-mesure, tant au déchargement qu'au chargement en source.

Conformément à l'invention, la vanne modulaire est du type defini dans la revendication 1.

D'autres caractéristiques et avantages de l'invention ressortiront mieux de la description qui va suivre, faite en regard des dessins annexés sur lesquels :
la figure 1 représente une vue en coupe d'une vanne modulaire selon l'invention,
la figure 2 représente une vue partiellement en coupe d'un assemblage de deux vannes modulaires selon l'invention ; et
la figure 3 représente une vue schématique en perspective d'un assemblage de vannes appliquées à une citerne multi-compartiments.

Sur ces dessins, les mêmes références désignent les mêmes éléments.

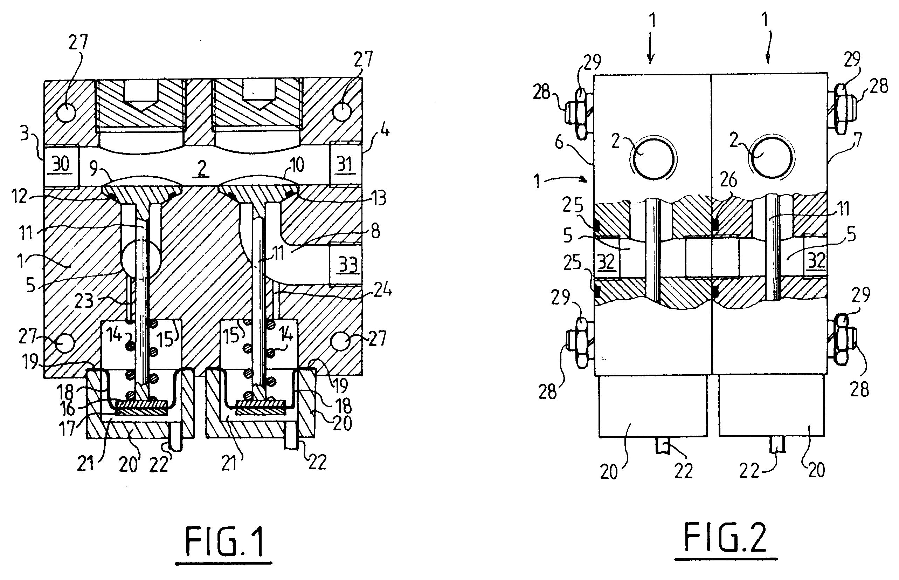

En se référant aux figures 1 et 2, une vanne modulaire selon l'invention comprend un corps 1 de forme sensiblement parallélépipédique comportant, comme mentionné ci-dessus, les conduits ci-après : un conduit droit 2 le traversant de part en part entre deux faces opposées 3, 4 ; un conduit en T communiquant avec ledit conduit 2 et dont la branche droite 5 traverse le corps 1 de part en part entre deux faces parallèles opposées 6, 7 perpendiculaires aux précédentes ; et un conduit coudé 8 dont une première extrémité débouche dans ledit conduit 2 et la seconde extrémité débouche sur la même face (4) qu'une extrémité dudit conduit droit 2 et parallèlement à ce dernier. Les conduits respectifs en T et coudé 8 débouchent dans le conduit droit 2 par l'intermédiaire de clapets 9, 10 à commande pneumatique individuelle. Chaque clapet constitue le chapeau d'une soupape comportant une tige 11 montée à rappel élastique en position de repos sur les sièges respectifs 12, 13, par l'intermédiaire d'un ressort convenable 14 dont l'extrémité fixe prend appui dans un logement 15 du corps 1. A l'opposé du clapet, chaque tige 11 est munie de plaquettes appropriées 16, 17 assurant, d'une part, l'appui du ressort et, d'autre part, la fixation entre elles d'une membrane élastique 18 immobilisée à sa périphérie entre une gorge 19 et un carter 20 rapporté de toute manière appropriée sur le corps 1. Selon cet agencement, le carter 20 définit une chambre intérieure 21 reliée à une source de fluide pneumatique sous pression par l'intermédiaire de raccords 22. De façon connue en soi, des canaux 23, 24 disposés entre le logement 15 et le conduit respectif, assurent un équilibrage des clapets. En vue de l'assemblage des vannes modulaires entre elles, une face comporte une gorge 25, par exemple coaxiale à la branche droite 5, du conduit en T, où peut être inséré un joint torique 26, et des orifices 27 destinés à recevoir un tirant 28 bloqué par exemple par des écrous 29.

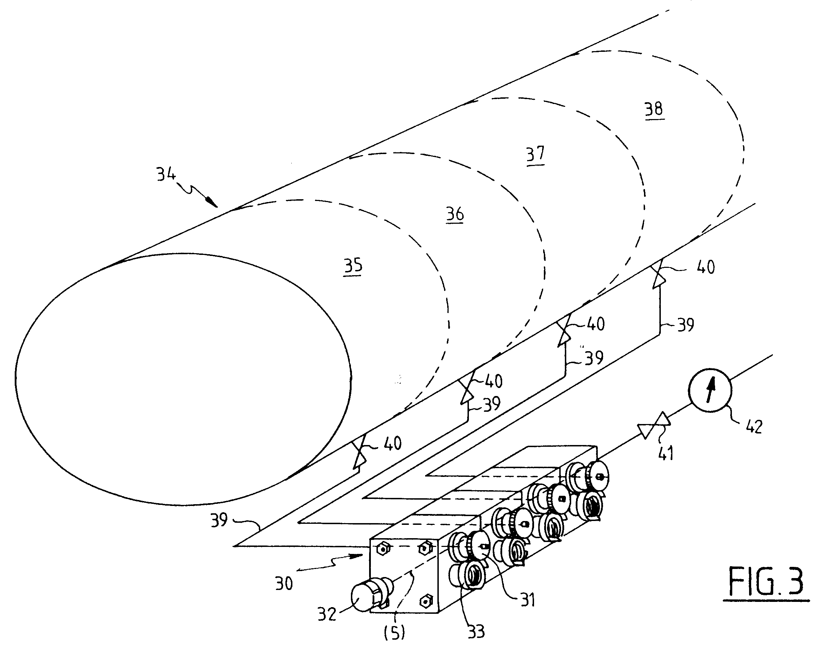

Avec la vanne telle que décrite ci-dessus, on conçoit qu'il est possible, à volonté, d'isoler le conduit droit 2 par fermeture des deux clapets 9, 10, ou de mettre en communication avec ledit conduit soit la branche droite 5, soit le conduit coudé 8, pour une circulation de liquide dans les deux sens, c'est-à-dire pour les cas de chargement et de déchargement d'une citerne. A cet effet, et en se référant également à la figure 3, (sur laquelle on n'a pas représenté les conduits pneumatiques de commande, pour raison de clarté), les extrémités des différents conduits sont munies de raccords appropriés, à savoir, les extrémités 30 et 31 pour le conduit 2, 32 pour le conduit 5 et 33 pour le conduit 8.

A titre d'exemple, on peut équiper une citerne de référence générale 34 à quatre compartiments 35, 36, 37, 38 reliés respectivement à quatre vannes assemblées ou "flasquées", par une canalisation 39 rattachée à l'extrémité 30 et prolongeant le conduit droit 2 de chaque vanne. L'empilement des vannes constitue ainsi un collecteur à plusieurs voies et l'équipement se complète bien entendu par les organes usuels tels que robinets d'arrêt (clapets de fond) 40 sur chaque compartiment et 41 sur une canalisation générale, compteur 42 et tous autres organes nécessaires, par exemple pompe, au moyen de cet agencement, on peut ainsi effectuer notamment les opérations suivantes :
chargement en source par coupleur sec, compartiment par compartiment de 31 à 39 ;
chargement en source par coupleur sec de 32 ou 41 à 39, ce qui permet de charger plusieurs compartiments avec un seul couplage ;
dépotage compté en 42 par passage de 39 vers 41, ce qui permet de vider plusieurs compartiments sans manipuler de flexible ;
dépotage gravitaire de 39 vers 33 par compartiment-mesure.

Outre la souplesse d'utilisation de la vanne selon l'invention, ladite vanne présente en soi les avantages suivants :
- sécurité positive en cas d'alimentation par 39 et 30 ;
- auto-compensation en cas d'alimentation par 32, 41 ou 33 ;
- vidange complète par 33 ou 41.

## Revendications

1. Vanne modulaire, du type constitué d'un corps parallélépipédique (1) muni de conduits (2, 5, 8) et de clapets (9, 10) destinés à établir et couper des communications entre lesdits conduits, deux faces planes parallèles (6, 7) dudit corps parallélépipédique permettant de constituer un empilement à autant de vannes que de voies désirées, un conduit droit (2) traversant le corps (1) de part en part entre deux faces planes opposées (3, 4), caractérisée par le fait qu'elle comporte un conduit en T dont la base communique avec ledit conduit droit (2) et dont la branche droite (5) traverse ledit corps de part en part entre lesdites deux faces planes parallèles (6, 7) perpendiculaires aux deux faces planes opposées (3, 4) et un conduit coudé (8) dont une première extrémité débouche dans ledit conduit droit (2) et la seconde extrémité (33) débouche sur la même face (4) qu'une extrémité (31) du conduit droit (2) et parallèlement à ce dernier, les conduits respectifs en T et coudés (8) débouchant dans ledit conduit droit (2) par l'intermédiaire de clapets (9, 10) de soupapes à commande pneumatique individuelle (21, 22), lesdits clapets étant à rappel élastique.

2. Vanne selon la revendication 1, caractérisée par le fait que chaque soupape comporte une tige (11) dont l'extrémité opposée au clapet est munie de deux plaquettes (16, 17) pour l'appui d'un ressort de rappel (14) et assurant la fixation entre elles d'une membrane élastique (18) montée dans un carter (20) fixé sur le corps (1) et définissant une chambre intérieure (21) reliée à un raccord (22) pour une source de fluide pneumatique.

3. Vanne selon l'une des revendications 1 ou 2, caractérisée par le fait qu'une des deux faces planes parallèles comporte une gorge (25) coaxiale à la branche droite (5) du conduit en T, où peut être inséré un joint d'étanchéité, ainsi que des orifices (27) de passage de tirants (28), afin de constituer un ensemble par empilement.

4. Vanne selon l'une quelconque des revendications 1 à 3, caractérisée par le fait que chaque extrémité (30, 31, 32, 33) des conduits respectifs (2, 5, 8) est munie d'un raccord de canalisation.

5. Ensemble modulaire constitué d'un empilement de vannes modulaires selon l'une quelconque des revendications 1 à 4, appliqué à former collecteur à plusieurs voies pour citerne multi-compartiments.

## Claims

1. A modular valve, of the type comprising a parallelepipedal body (1) provided with ducts (2, 5, 8) and flap-valves (9, 10) intended for establishing and breaking communications between said ducts, two parallel plane faces (6, 7) of said parallelepipedal body making it possible to form a stack having as many valves as there are paths desired, a straight duct (2) passing right through the body (1) between two opposing plane faces (3, 4), characterised by the fact that it comprises a T-shaped duct, the base of which communicates with said straight duct (2), and the straight arm (5) of which passes right through said body between said two plane parallel faces (6, 7) which are at right-angles to the two opposing plane faces (3, 4), and a right-angled duct (8), one first end of which opens into said straight duct (2) and the second end (33) of which opens onto the same face (4) as one end (31) of the straight duct (2) and parallel thereto, the respective T-shaped and right-angled ducts (8) opening into said straight duct (2) via flaps (9, 10) of individually pneumatically operated lift-valves (21, 22), said flaps being elastically closable.

2. A valve according to Claim 1, characterised by the fact that each lift-valve comprises a stem (11), the end of which which is opposed to the flap is provided with two small plates (16, 17) for a return spring (14) to bear on and fixing between them an elastic membrane (18) mounted in a casing (20) fixed to the body (1) and defining an inner chamber (21) connected to a connector (22) for a pneumatic fluid source.

3. A valve according to one of Claims 1 or 2, characterised by the fact that one of the two plane parallel faces comprises a recess (25) which is coaxial to the straight arm (5) of the T-shaped duct, in which a gasket may be inserted, and also openings (27) for tie-rods (28) to pass through, in order to form an assembly by stacking.

4. A valve according to any one of Claims 1 to 3, characterised by the fact that each end (30, 31, 32, 33) of the respective ducts (2, 5, 8) is provided with a pipe coupling.

5. A modular assembly formed of a stack of modular valves according to any one of Claims 1 to 4, applied to form a multi-path collector for a multi-compartment tank.

## Patentansprüche

1. Modulares Ventil vom Typ mit einem quaderförmigen Gehäuse (1) mit Leitungen (2,5,8) und Klappenventilen (9,10) zum Herstellen und Unterbrechen von Verbindungen zwischen den Leitungen mit zwei ebenen parallelen Seiten (6,7) des quaderförmigen Gehäuses, welche die Bildung eines Stapels mit so vielen Ventilen wie gewünschten Wegen ermöglichen, mit einer geraden Leitung (2), welche das Gehäuse (1) von der einen zur anderen Seite zwischen zwei gegenüberliegenden ebenen Seiten (3,4) durchsetzt, **dadurch gekennzeichnet,** daß es eine T-Leitung aufweist, deren Stamm mit der geraden Leitung (2) in Verbindung steht und deren gerader Zweig (5) das Gehäuse von einer zur anderen Seite zwischen den parallelen ebenen Seiten (6,7) senkrecht zu den zwei ebenen gegenüberliegenden Seiten (3,4) durchsetzt, und eine gebogene Leitung (8) aufweist, von der ein erstes Ende in der geraden Leitung (2) mündet und das zweite Ende (33) an der gleichen Seite (4) wie ein Ende (31) der geraden Leitung (2) und parallel zu dieser mündet, wobei die T-Leitung und die gebogene Leitung (8) in der geraden Leitung (2) mittels Klappenventilen (9,10) mit pneumatischer Einzelbetätigung (21,22) münden, welche mit elastischer Rückstellung beaufschlagt sind.

2. Ventil nach Anspruch 1, **dadurch gekennzeichnet,** daß jedes Klappenventil eine Stange (11) aufweist, deren der Klappe entgegengesetztes Ende mit zwei Platten (16,17) für die Abstützung einer Rückstellfeder (14) versehen ist, welche miteinander für die Befestigung einer elastischen Membran (18) sorgen, die in einem am Gehäuse (1) befestigten Gehäuse (20) montiert ist, das eine Innenkammer (21) begrenzt, die mit einem Anschluß (22) für eine pneumatische Druckmittelquelle verbunden ist.

3. Ventil nach einem der Ansprüche 1 oder 2, **dadurch gekennzeichnet,** daß eine der zwei ebenen parallelen Flächen eine mit setzen einer Dichtung sowie Bohrungen (27) für den Durchtritt von Zugstangen (28) für die Bildung einer Stapelanordnung aufweist.

4. Ventil nach einem der Ansprüche 1 bis 3, **dadurch gekennzeichnet,** daß jedes Ende (30,31,32,33) der jeweiligen Leitungen (2,5,8) mit einem Stutzen (Kuppelstück) versehen ist.

5. Modulanordnung bestehend aus einem Stapel von modularen Ventilen nach einem der Ansprüche 1 bis 4, welche eine Sammelleitung mit mehreren Wegen für einen Mehrkammertank bildet.
